# EUROPEAN PATENT APPLICATION

(11) **EP 1 349 289 A1**
(43) Date of publication of application: **01.10.2003**
(21) Application number: 02252209.8
(22) Date of filing: 27.03.2002
(51) Int. Cl.: H04B 1/40

(54) **Low cost S-UMTS extension to a T-UMTS terminal**

(71) Applicant: Agilent Technologies, Inc. (a Delaware corporation), Palo Alto, CA 94303 (US)
(72) Inventor: Dieudonné, Michael c/o Agilent Techn.Belg.S.A./N.V, B-3110 Rotselaar (BE)
(74) Representative: Coker, David Graeme

(57) **Abstract**

The present invention is related to a terrestrial UMTS or equivalent terminal for the reception of broadcast and/or multicast information, comprising a reconfigurable baseband processor and an internal RF front-end for terrestrial reception, characterised in that said reconfigurable baseband processor is reconfigurable for terrestrial and satellite UMTS or equivalent reception and in that said terminal comprises a connector at intermediate frequency arranged to connect an external RF front-end for satellite UMTS reception..

## Description

### Field of the invention

The present invention is related to a terminal for telecommunications, more particularly to a novel terminal for 3G (UMTS) applications.

### State of the art

In 3G (UMTS) telecommunications, different types of new services are being developed for the consumer. The current typical offer of point to point communication, such as phone call and video conferencing, will be extended with service offerings using data broadcasting and data multicasting. These services will include broadcasting and multicasting of traffic information, stock exchange data, music broadcasting, video streaming, etc.

These new complementary services can be implemented by using the terrestrial component of UMTS. However, in order to provide broadcasting/multicasting services, every base-station (Node B) of the terrestrial network has to transmit the information. On the network level, this will mean a heavy traffic load to provide the data to all these base-stations.

This disadvantage of heavy traffic load disappears when the network is satellite based. Therefore S-UMTS (Satellite UMTS) or S-DMB (Satellite Digital Multimedia Broadcasting) or satellite based equivalent schemes are an efficient way to provide broadcasting and multicasting services to many UMTS users.

As T-UMTS users will predominate the UMTS market, Broadcasting/Multicasting services should be made available to the T-UMTS users as complementary services while avoiding heavy investments into a network architecture suitable to provide the data to the base stations as explained higher. "S-UMTS only" (or "Satellite only") services will not be a commercial success if not combined with a T-UMTS (Terrestrial UMTS) terminal. The application field of S-UMTS will probably be mainly in the automotive industry but it is not limited to it.

Non S-UMTS customers will on the other hand not accept to pay for a more expensive terminal having the S-UMTS capability for extra services that they would not use.

### Aims of the invention

The present invention aims to provide a novel device for T-UMTS telecommunications, providing the possibility to at least receive S-UMTS broadcasted and/or multicasted data without fully implementing S-UMTS capability in said device.

### Summary of the invention

The present invention concerns a terrestrial UMTS or equivalent terminal for the reception of broadcast and/or multicast information, comprising a reconfigurable baseband processor and an internal RF front-end for terrestrial reception, characterised in that said reconfigurable baseband processor is reconfigurable for terrestrial and satellite UMTS or equivalent reception and in that said terminal comprises a connector at intermediate frequency arranged to connect an external RF front-end for satellite UMTS reception.

The internal RF front-end of the terrestrial UMTS terminal of the present invention can be arranged for terrestrial UMTS transmission. The external RF front-end can be powered by a battery, comprised in said terminal or by an external power source.

In a further embodiment of the present invention, a satellite UMTS extension for connection to a terrestrial UMTS terminal is disclosed, characterised in that it comprises an external front-end for satellite reception and a connector arranged to connect to the connector as in the present invention at intermediate frequency.

Another embodiment of the present invention comprises a car cradle arranged for plugging the terminal of the present invention, characterised in that it comprises the satellite UMTS extension of the invention and is arranged to connect the connector of the satellite UMTS extension to the connector at intermediate frequency of said terrestrial UMTS terminal. The car cradle can be further characterised in that the reconfigurable baseband processor is arranged to be reconfigured from terrestrial to satellite UMTS reception when the terminal is plugged in the car cradle.

### Short description of the drawings

Figure 1 represents the implementation of a Receive/Transmit S-UMTS extension to a T-UMTS terminal.

Figure 2 represents the transportable version of the S/T-UMTS terminal represented in figure 1.

Figure 3 represents the implementation of an Rx S-UMTS only extension to a GPRS/T-UMTS terminal.

Figure 4 represents the transportable version of the S/T-UMTS terminal represented in figure 3.

### Detailed description of the invention

The present invention concerns an interface that allows a T-UMTS terminal to be complemented to receive and/or transmit data by using the S-UMTS/S-DMB standard without implying a dramatic increase of the terminal cost and terminal complexity.

This implies that the S-UMTS/S-DMB support must be included in all T-UMTS terminals without increasing the production cost of the terminal. Because T-UMTS terminals are developed for the mass market, small changes in the development will have a limited impact on the terminal cost price.

Some broadcasting types of services do not require a return link (e.g. Terminal transmitting an acknowledge). If this return link is not required, the S-UMTS section of the terminal can be limited to a Receive only system.

### Implementation issues

The first problem encountered in the development of a multimode (T/S-UMTS) terminal is related to the RF section.

S-UMTS, or an equivalent scheme, will be implemented in another frequency band than the T-UMTS frequency band. This difference will have a certain impact on the T-UMTS terminal architecture. It will increase the complexity of the RF front end of the terminal. S-UMTS functioning in another frequency band will require either programmable filtering (expensive) or a duplication of the RF components in the terminal (expensive and technically difficult due to the volume).

The second problem encountered in the development of a multimode (T/S-UMTS) terminal is related to the transmit power. The S-UMTS return link is a connection between a user terminal and a satellite, this will require higher power gain compared to a terrestrial connection. This will have a heavy impact on the battery life of the terminal, which is also not acceptable.

An advantage of S-UMTS is that the S-UMTS waveform is nearly the same as the T-UMTS waveform. A reconfigurable baseband processor can cover the minor deviations between these two standards. Such a reconfigurable UMTS baseband processor has been described in WO01/08314 and WO00/69089.

### Implementation solution

By keeping the RF section related to the S-UMTS component out of the terminal in a physically separated peripheral, one allows the user to buy it as a separate option without significantly increasing the cost and/or size of his T-UMTS terminal.

To decrease the cost of the S-UMTS kit, the reconfigurable baseband processor (6) of the T-UMTS terminal will be re-configured and used.

Therefore, the only improvement that has to be done to the T-UMTS is:
- adding an analog base band connection (3) at low IF for the Rx and the optional Tx section of the terminal;
- adding a control extension (digital connection 4) of the Satellite RF section (8).

This can be done by means of a "plug and play" connector, which for example clicks into the car-kit.

This type of implementation can be typically but non exclusively used in the automotive industry.

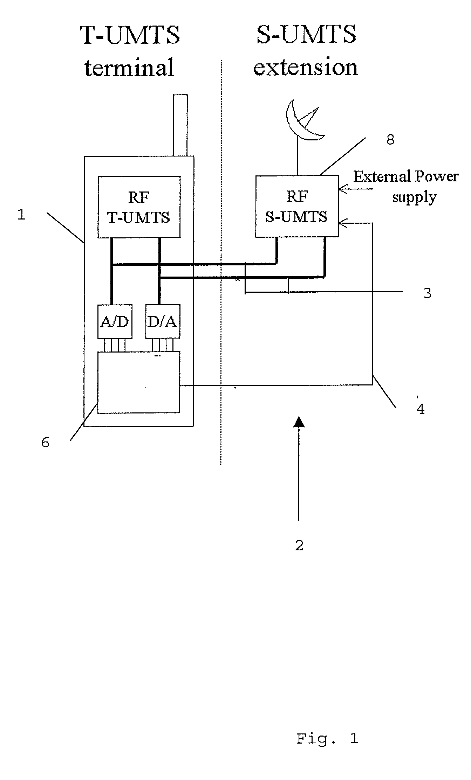

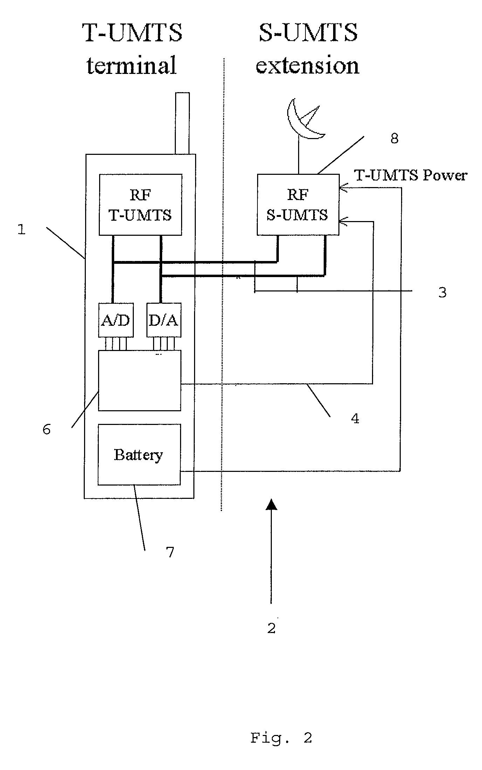

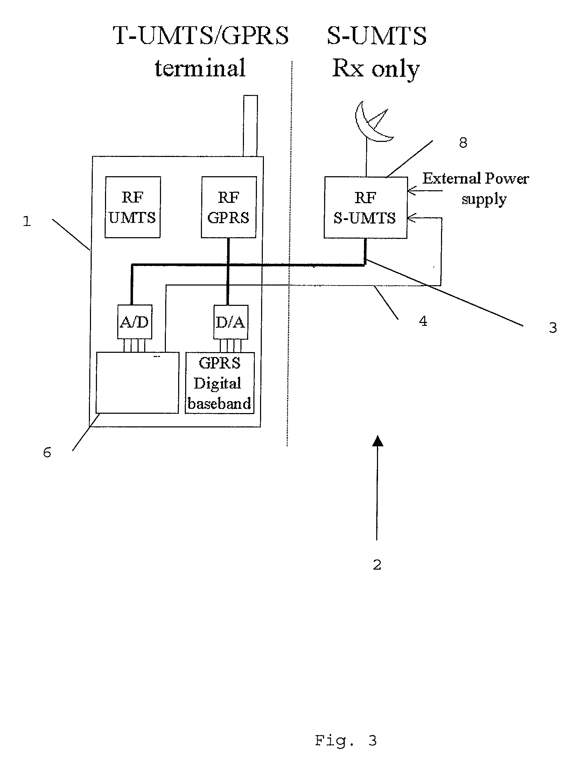

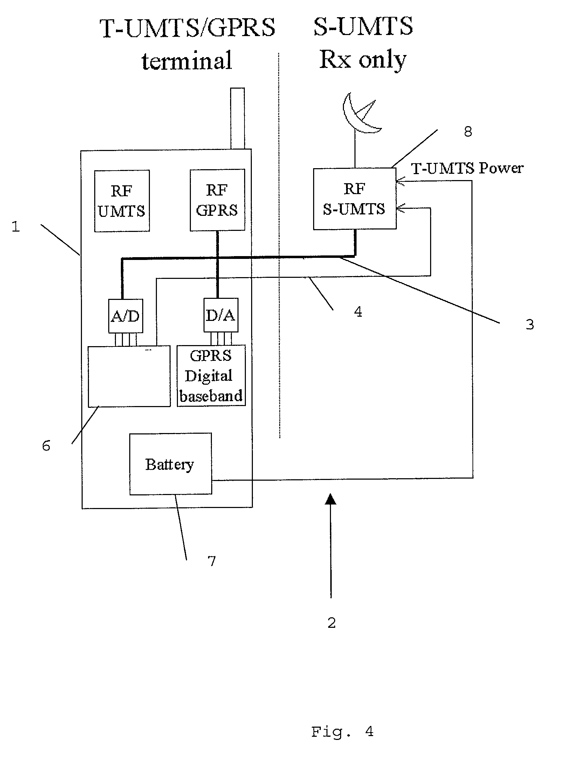

The battery life problem caused by the S-UMTS section can be solved by adding an extra power module 7 to the RF section (transportable version)(See figure 2,4) or by mounting the module directly in a car (in the case of an automotive version) and connecting it to an external power source such as the car battery (See figure 1,3).

Figure 1 represents the implementation of a Receive/Transmit S-UMTS extension to a T-UMTS terminal. The connection between the Terminal 1 and the module 2 is done at analogue low IF. Control of the front-end section is implemented through a digital connection 4.

Figure 3 represents the implementation of an Rx S-UMTS only extension to a GPRS/T-UMTS terminal. The connection between the Terminal and the module is done at analogue low IF. A control of the front-end section is implemented through a digital connection 4 between the Digital baseband processor 6 and the S-UMTS RF front end 8.

Simplified versions of an S/T-UMTS terminal including a satellite receive only section can be developed as well. The return link (transmitter section) will or use the T-UMTS or use another terrestrial network such as but not limited to GPRS (See figure 3,4)

### Abbreviation list

- UMTS: Universal Mobile Telecommunications Systems
- GPRS: General Packet Radio Service
- T-UMTS: terrestrial component of UMTS
- S-UMTS: satellite component of UMTS
- IF: Intermediate frequency
- Tx: transmit
- Rx: receive
- RF: Radio Frequency

## Claims

1. A terrestrial UMTS or equivalent terminal (1) for the reception of broadcast and/or multicast information, comprising a reconfigurable baseband processor (6) and an internal RF front-end for terrestrial reception, **characterised in that** said reconfigurable baseband processor (6) is reconfigurable for terrestrial and satellite UMTS or equivalent reception and **in that** said terminal comprises a connector at intermediate frequency arranged to connect an external RF front-end (8) for satellite UMTS reception.

2. The terrestrial UMTS terminal as in claim 1, wherein the internal RF front-end is arranged for terrestrial UMTS transmission.

3. The terrestrial UMTS terminal as in claim 1 or 2, wherein the external RF front-end is powered by a battery (7) comprised in said terminal.

4. The terrestrial UMTS terminal as in claim 1 or 2, wherein the external RF front-end is powered by an external power source.

5. A satellite UMTS extension for connection to a terrestrial UMTS terminal, **characterised in that** it comprises an external front-end for satellite reception and a connector arranged to connect to the connector at intermediate frequency such as in claim 1.

6. A car cradle arranged for plugging the terminal as in any of the claims 1 to 4, **characterised in that** it comprises the satellite UMTS extension of claim 5 and is arranged to connect the connector of the satellite UMTS extension to the connector at intermediate frequency of said terrestrial UMTS terminal.

7. The car cradle as in claim 6, **characterised in that** the reconfigurable baseband processor (6) is arranged to be reconfigured from terrestrial to satellite UMTS reception when the terminal is plugged in the car cradle.
